Europäisches Patentamt

European Patent Office

Office européen des brevets

(11) Publication number: **0 519 557 A1**

# EUROPEAN PATENT APPLICATION

(21) Application number: **92201705.8**

(22) Date of filing: **11.06.92**

(51) Int. Cl.5: **B23H 7/10**

(30) Priority: **20.06.91 EP 91201583**

(43) Date of publication of application:
**23.12.92 Bulletin 92/52**

(84) Designated Contracting States:
**CH DE ES FR GB IT LI NL**

(71) Applicant: **N.V. Philips' Gloeilampenfabrieken**
**Groenewoudseweg 1**
**NL-5621 BA Eindhoven(NL)**

(72) Inventor: **Fey, Alphonsus Marie Jozef**
**Gerardus**
**c/o INT. OCTROOIBUREAU B.V., Prof.**
**Holstlaan 6**
**NL-5656 AA Eindhoven(NL)**

(74) Representative: **Weening, Cornelis et al**
**INTERNATIONAAL OCTROOIBUREAU B.V.**
**Prof. Holstlaan 6**
**NL-5656 AA Eindhoven(NL)**

(54) **Wire guide for use in a spark-erosion device.**

(57) The invention relates to a wire guide for use in a spark-erosion device, which wire guide comprises a metal holder having an axial through-hole in which a diamond is secured. The life of the wire guide is extended by providing the holder with an electrically insulating layer. The wire guide preferably comprises an aluminium holder which is provided with an electrically insulating alumina layer by anodizing.

FIG.2

The invention relates to a wire guide for use in a spark-erosion device, which wire guide comprises a metal holder having a axial through-hole in which a diamond is secured. The invention also relates to a spark-erosion device comprising such a wire guide.

Using spark-erosion devices, metal objects having a complicated or a simple configuration can be rapidly and efficiently manufactured. Such a spark-erosion device comprises a metal sparking wire electrode which is positioned relative to the object to be machined by means of two wire guides. In the spark-erosion process, the sparking wire electrode is moved through the wire guides at a approximately constant rate. In this process, said electrode is usually kept at an, either pulsed or non-pulsed, negative voltage of maximally several hundred Volts relative to the object to be machined. Under these conditions, the electrode can be used to cut the metal object. In this cutting operation, metal particles are removed from said object under the influence of electric discharges between the electrode and the object.

The customary wire guides comprise a stainless steel holder having a axial through-hole. Such a holder may be built up of a number of components which are bonded together by means of an adhesive. One-piece holders, however, are also known. In general, said holders comprise means of securing them to the spark-erosion device, such as flanges having bores allowing the holder to be screwed on to the spark-erosion device. Sometimes, the holders are clamped in the spark-erosion device. A diamond is secured in the axial aperture of the holder, for example by means of a adhesive and/or clamping. Said diamond may have a through-bore extending axially relative to the hole in the holder. It is alternatively possible that the diamond is provided with a groove. Both the through-bore and the groove serve to guide the sparking wire electrode. During spark erosion, intensive, mechanical contact takes place between the diamond in the holder on the one hand and the moving sparking wire electrode on the other hand. This results in wear on the diamond. In fact, the life of the wire guide is determined by the life of the diamond. Owing to the hardness and resistance to wear of diamond, it may be expected that wire guides have a long life.

Applicants have found that a prolonged use of the known wire guides results in an unexpectedly heavy wear on the diamond. Said wear is not limited to polycrystalline diamond, it also includes, although to a lesser degree, monocrystalline diamond.

It is an object of the present invention to provide a wire guide which does not have the above-mentioned disadvantage. The invention more particularly aims at providing a wire guide which is less subject to wear. According to a further object, it must be possible to manufacture the inventive wire guide at low cost and in a simple manner.

These and other objects are achieved by a wire guide of the type mentioned in the opening paragraph, which is characterized according to the invention in that the holder is provided with an electrically insulating layer.

Applicants have found that the unexpectedly rapid wear on the diamond can be attributed to electric discharges taking place between the diamond and the sparking wire electrode. Since electric charges can readily be conducted away to other electrically conductive parts of the spark-erosion device *via* the metal holder, said electric discharges subsist throughout the spark-erosion operation. Said discharges can be limited by insulating the holder of the wire guide relative to the other components of the spark-erosion device. By virtue thereof, the wear on the diamond is reduced and, hence, the life of the wire guide is considerably extended.

In principle, the layer can comprise any electrically insulating material such as, for example, an electrically insulating synthetic resin or titanium nitride. It is not necessary to provide the layer on the entire holder. Preferably, however, the insulating layer is provided such that it covers the part of the holder which mechanically contacts the spark-erosion device during the spark-erosion operation. However, by providing the entire holder, including the axial through-hole, with such a layer, a double insulation is obtained. This is considered to be a advantage. Further it has been found that the application of the insulating layer to the entire surface of the holder benefits the case of manufacture, in particular, when the insulating layer is provided in solution.

A preferred embodiment of the wire guide according to the invention is characterized in that the metal holder is of aluminium and that the electrically insulating layer is of alumina. Such a wire guide can be manufactured in a relatively simple manner by anodizing an aluminium holder in solution. This can be carried out by using available techniques such as, for example, by opalescing or anodizing aluminium. The wire guides according to this embodiment of the invention have the advantage of a relatively high hardness and scratch resistance. In general, synthetic resin layers do not have this favourable property. Besides, the insulating layer of alumina ( = aluminium oxide) has very favourable bonding properties. Further, it has been found that a layer of anodized aluminium has a relatively high degree of electrical insulation. The alumina layers can alternatively be provided by CVD techniques. However, this method is relatively expensive.

Aluminium is to be understood to include not only "pure" aluminium but also aluminium alloys having an aluminium content of at least 80 at%. Aluminium objects generally contain a relatively small quantity of Si, Mg, Fe and/or Mn. For example, AlSi12 (an Al alloy containing 12 at% of Si) is often used.

The electrically insulating power of the layer on the holder depends to an important degree on the thickness of said layer. It has been found that a layer thickness of minimally 1 micrometer is sufficient to obviate the problem of the abrasive action of the sparking wire electrode in the diamond of the wire guide at customary spark-erosion voltages. Preferably, the layer thickness does not exceed 20 micrometers. Larger thicknesses may lead to problems regarding the dimensional stability of the finished object. With a view to an efficient manufacture, layer thicknesses ranging between 5 and 15 micrometer are preferred.

In principle, different types of diamond can be used in the wire guide according to the invention. Thus, for example monocrystalline diamonds can be used. The greatest advantage, however, is otained by using polycrystalline diamonds. If they are secured in a holder with an electrically insulating layer, said diamonds have a greater resistance to wear than monocrystalline diamonds.

The invention also relates to a spark-erosion device which comprises a wire guide. Said spark-erosion device is characterized in that the wire guide comprises a metal holder having an axial through-hole in which a diamond is secured, said holder being provided with an electrically insulating layer. The holder preferably consists of aluminium and the layer preferably consists of alumina. Preferably, the layer has a thickness of 5 - 15 $\mu$m.

The invention will be explained in greater detail by means of exemplary embodiments and with reference to the accompanying drawing, in which

Fig. 1 diagrammatically shows the operation of a spark-erosion device,

Fig. 2 is an axial sectional view of a wire guide according to the invention, for use in a spark-erosion device,

Fig. 3 is an axial sectional view of a different wire guide according to the invention.

It is noted that, for clarity, the components in each of the individual Figures are not necessarily drawn to the correct scale.

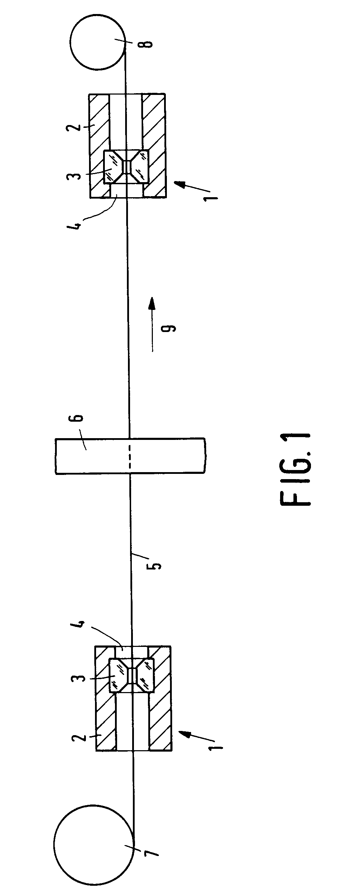

Fig. 1 shows a number of components of a spark-erosion device. The components shown are two wire guides 1, each comprising a metal holder 2 and a diamond 3. The diamond is provided in the through-hole 4 of the holder 2. The holders are secured to the spark-erosion device by means of securing means such as, for example, screws (not shown). A metal sparking wire electrode 5 is led through the wire guides, which electrode is at a, generally negative, pulse voltage of several hundred Volts relative to the object 6 to be treated. In the spark-erosion process, the wire is unwound from a supply reel 7 and wound on a storage reel 8. Using the sparking wire electrode which moves in the direction of the arrow 9, an object 6 can be provided with a desired configuration.

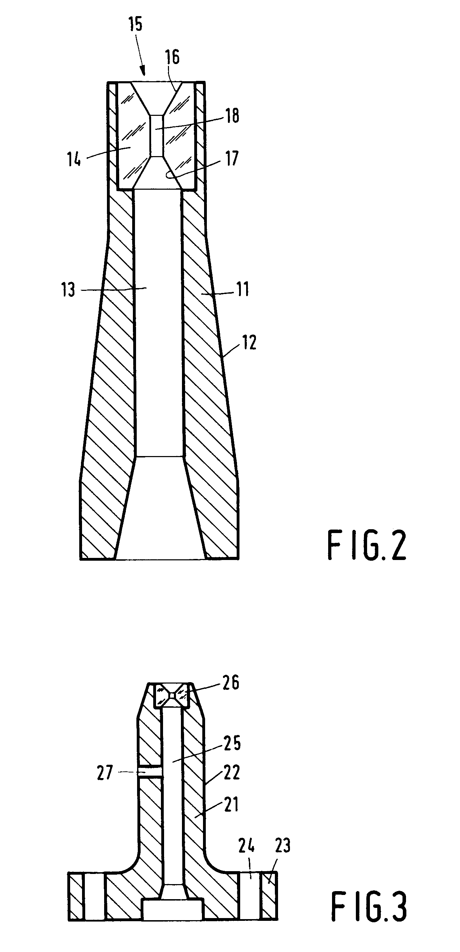

Fig. 2 is an axial sectional view of a wire guide according to the invention, which can be clamped in a spark-erosion device. The wire guide comprises an aluminium holder 11 which is provided with an electrically insulating layer 12 of alumina. In this case, the aluminium consisted of AlMgSil which, besides aluminium, includes magnesium, silicon and manganese in a quantity of approximately 1 at% each. Alumina layer 12 has a thickness of 10 micrometers. The holder is provided with a cylindrical through-hole 13 in which a polycrystalline diamond 14 is secured. Said diamond is also provided with a cylindrical through-bore 15. Both end portions 16 and 17 of said hole are funnel-shaped. The diameter of the central part 18 of bore 15 is adapted to the thickness of the sparking wire electrode to be led through the diamond in question.

Diamond 14 is secured in the holder 11 by means of an adhesive. A cyanoacrylate derivative which is cured under the influence of heat is used as the adhesive. In the present case, said securing process takes place after the insulating layer has been provided. Since the entire surface of holder 11 is provided with such an insulating layer, a double electrical insulation of the diamond is obtained relative to the spark-erosion device to which the wire guide according to the invention is secured.

In the present case, the insulating layer was provided by anodizing the originally uncoated aluminium holder 11. For this purpose, the holder was immersed in an aqueous solution containing 200 g/l of sulphuric acid. In this process, the holder was electrically connected to a counter-electrode (cathode) *via* a direct current source, which counter-electrode was also present in the solution. Dependent upon the voltage of the current source and the duration of the treatment, an electrically insulating alumina layer of the desired thickness was formed on the holder. This method is known as anodizing.

Fig. 3 shows a different embodiment of the wire guide according to the invention. Said wire guide also comprises an aluminium holder 21 which is provided with an electrically insulating layer of alumina 22 (AlMgSil). Said holder is also provided with securing means 23 in the form of a flange having screw holes 24. By means of said securing means, the holder can be screwed on to a spark-erosion device.

The holder 21 has a cylindrical through-hole 25 in which a polycrystalline diamond 26 is secured by means of an adhesive. A thermosetting cyanoacrylate derivative was used as the adhesive. The diamond is also provided with a cylindrical axial aperture having funnel-shaped end portions.

The holder further comprises a radial bore 27. Said bore serves as a water outlet. The "threading" of the sparking wire electrode is carried out under the influence of a jet of water which is passed through the axial hole in the wire guide. The bulk of this water jet leaves the wire guide *via* said water outlet.

The electrically insulating alumina layer 22 is provided by anodizing the originally uncoated holder 21 in an aqueous solution of oxalic acid, a trivalent chromium compound and potassium hydroxide. For this purpose, the holder was connected to a counter-electrode *via* direct current source, which counter-electrode was also immersed in the solution. This method is commonly referred to as "opalescing". The alumina layer obtained by said opalescing treatment has a less porous structure than an anodized alumina layer and, hence, a greater hardness. Further it has been found that the corrosion resistance of an opalesced layer is better than that of an anodized layer.

The technical effect of the present invention was tested by means of wire guides of the above-mentioned type. In said tests, different wire guides, with and without an electrically insulating layer on the holder, were compared with each other. It was found that the wire guides carrying an insulating layer had a longer life than the uncoated wire guides. Wire guides comprising holders having an electrically insulated layer exhibited substantially less wear on the diamond.

## Claims

1. A wire guide for use in a spark-erosion device, which wire guide comprises a metal holder having an axial through-hole in which a diamond is secured, characterized in that the holder is provided with an electrically insulating layer.

2. A wire guide as claimed in Claim 1, characterized in that the metal holder is of aluminium and the electrically insulating layer is of alumina.

3. A wire guide as claimed in one of the preceding Claims, characterized in that the electrically insulating layer has a thickness of 1-20 micrometers.

4. A wire guide as claimed in one of the preceding Claims, characterized in that the diamond consists of polycrystalline material.

5. A spark-erosion device comprising a sparking wire electrode and means which, in operation, propel the sparking wire electrode, a voltage generator and at least one wire guide, characterized in that the wire guide comprises a metal holder having an axial through-hole in which a diamond is secured, said holder being provided with an electrically insulating layer.

6. A spark-erosion device as claimed in Claim 5, characterized in that the holder is of aluminium and the electrically insulating layer is of alumina.

7. A spark-erosion device as claimed in Claim 6, characterized in that the layer has a thickness of 1-20 micrometers, for example 5 - 15 micrometers.

FIG.1

FIG.2

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | WO-A-9 009 855 (FORT WAYNE WIRE DIE INC.) 7 September 1990 | 1,2,4,5,6 | B23H7/10 |
| A | * page 2, line 36 - page 3, line 4 * <br> * page 3, line 31 - page 4, line 30 * <br> * page 6, line 16 - line 26 * <br> * page 7, line 14 - line 22 * <br> * page 15, line 29 - page 16, line 9 * <br> * page 18, line 35 - page 19, line 2 * <br> * page 21, line 3 - page 22, line 19 * <br> * abstract; claims 1-44; figures 1-12 * | 3,7 | |
| X | US-A-4 613 740 (YOSHIYASU ICHIKAWA) 23 September 1986 | 1 | |
| A | * column 1, line 66 - column 2, line 13 * <br> * column 3, line 7 - line 37 * <br> * abstract; claims 1-7; figures 1-10 * | 2-6 | |
| A | EP-A-0 424 603 (MITSUBISHI DENKI KABUSHIKI) 2 May 1991 <br> * column 6, line 17 - line 49 * <br> * abstract; claim 1; figures 1,3,5,9 * | 2,6 | TECHNICAL FIELDS SEARCHED (Int. Cl.5) <br><br> B23H |

The present search report has been drawn up for all claims

| Place of search | Date of completion of the search | Examiner |
|---|---|---|
| THE HAGUE | 29 SEPTEMBER 1992 | HAEGEMAN M. |

EPO FORM 1503 03.82 (P0401)